# EUROPEAN PATENT APPLICATION

(11) **EP 4 741 111 A1**
(43) Date of publication of application: **13.05.2026**
(21) Application number: 25213991.0
(22) Date of filing: 06.11.2025
(51) Int. Cl.: B25J 9/16, B25J 9/00, B65G 43/08, B65G 61/00

(54) **METHOD FOR SAFELY FEEDING LOADS TO A ROBOT**

(30) Priority: 08.11.2024 IT 202400025179
(71) Applicant: Inxpect S.p.A., 25131 Brescia (BS) (IT)
(72) Inventor: Muzaka, Alban, 25131 Brescia BS (IT)
(74) Representative: Perani & Partners S.p.A.

(57) **Abstract**

To safely feed loads (200) to a robot (110), a barrier (120) with a passage opening (121), and a conveyor belt (130) are provided. A radar system (140) is configured to detect moving targets in three distinct detection regions (142a, 142b, 142c) above the conveyor belt (130), including a first region (142a) which occupies the passage opening (121), a third region (142c) proximal to the robot (110), and a second intermediate region (142b). In a sequence of entry steps, a load (200) advancing in the first and second regions (142a, 142b) is monitored until a verification step is initiated. In the verification step, the conveyor belt (130) remains still, and it is verified that there are no humans between the robot (110) and the barrier (120). In the entry and verification steps, the detection of a moving target in the third region (142c) determines the deactivation of the robot (110), In a delivery step, the conveyor belt (130) transports the load (200) towards the robot (110), and the detection of moving targets in the third region (142c) does not determine the deactivation of the robot (110).

## Description

### Technical field

The present invention is developed in the technical field of safety in automated work environments with hazards for humans.

### Background of the invention

In industrial production or processing sites, the presence of robotic machinery is common, therefore with automatically moving parts, potentially dangerous for a person who is too close to the robot.

In some applications, a robot must perform a series of repetitive operations on particular products, which are loaded onto pallets. In these cases, a first safety measure for people is the presence of a physical barrier to hinder the access of staff to the robot while it is operating, but still allowing the passage of the loads to be processed. Since people cannot reach the robot, the loads on the pallets are transported to the robot by a conveyor belt that passes through an opening in the barrier.

However, it can also happen that a person crosses the opening of the barrier and approaches the robot, for example to verify unexpected conditions in the operation of the robot. When this occurs, it is critical that safety procedures are followed, such as deactivating the robot when the operator reaches a certain distance.

Automated systems for controlling the deactivation of a robot when hazardous conditions occur are known in the art. Thanks to this automation, the risk of human error is avoided.

### Problems of the background art

To ensure maximum safety, and not risk the robot remaining active even in dangerous conditions, many automated systems control the deactivation of the robot frequently, even in non-hazardous conditions during the normal operation of the robot and the conveyor belt. This causes processing delays, and sometimes requires human intervention to reactivate the robot.

To avoid these problems, automated safety systems are desired which intervene selectively when it is actually required, distinguishing hazardous situations from normal safe operations, such as the movement of the load on the conveyor belt.

### Summary of the invention

The object of the present invention is to solve the aforementioned problems of the prior art, with a very selective detection of the hazardous conditions that allows the continuous operation of the robot, as long as the hazard does not manifest.

These and other objects are achieved by a method for safely feeding loads to a robot, a control system for feeding loads to a robot, and a system for feeding loads to a robot, according to any of the appended claims.

According to the invention, a radar system detects moving targets in three distinct detection regions above the conveyor belt, including a first region occupying the passage opening of the physical barrier protecting the robot, a third region proximal to the robot, and a second region between the first and third regions.

The operation of the conveyor belt and the robot are controlled as a function of the target detection by the radar system in the first, second, and third regions.

This control means that in a sequence of entry steps and in a verification step, following the sequence of entry steps, the detection of a moving target in the third region determines the deactivation of the robot.

In the sequence of entry steps, a load is monitored as it passes through the first and second regions, until a predetermined intermediate condition is reached, identified by a combination of target detections in the first, second and third regions such as to determine the start of the verification step.

In the verification step, starting from the intermediate condition, the conveyor belt is controlled to remain still, until reaching a predetermined safety condition, identified by a combination of target detections in the first, second and third regions indicative of the absence of humans between the robot and the barrier.

In a delivery step, following the verification step, starting from the safety condition, the conveyor belt is controlled to advance and transport the load towards the robot, and the detection of moving targets in the third region does not determine the deactivation of the robot.

Advantageously, this control maintains a general safeguard, whereby the third region can be passed through by a target without deactivating the robot only when it is reasonably certain that target is a load, and not a person.

Advantageously, the verification that no people are present occurs automatically by stopping the conveyor belt, and verifying that in that moment everything remains stationary.

Advantageously, when it is verified that there are no people present, the load has already passed the first region. Therefore, from that moment on, the restart of the conveyor belt will no longer bring the load to pass through the first region. Any detection of a target in the first region will therefore necessarily be caused by an unforeseen event, potentially the passage of a person, and consequently the robot can be deactivated.

Further features and advantages of the invention will be recognisable by a person skilled in the art from the following detailed description of exemplary embodiments of the invention.

### Brief description of the figures

For a better understanding of the following detailed description, some embodiments of the invention are illustrated in the accompanying drawings, wherein:

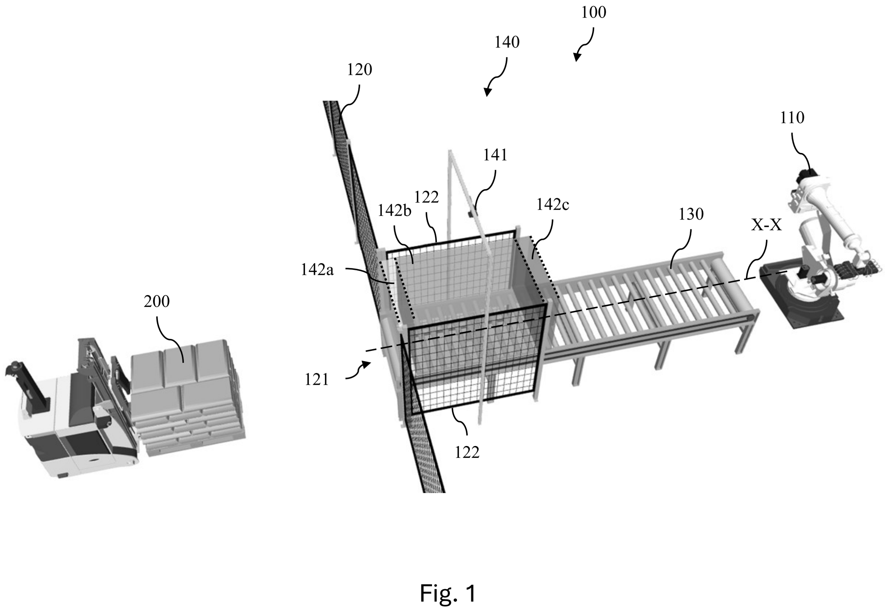

- Figure 1 shows a system for feeding loads to a robot according to an embodiment of the invention, before starting the loading operations,
- Figure 2 shows the system of Figure 1, during a sequence of entry steps of the load on a conveyor belt,
- Figure 3 shows the system of Figure 1 during a safety verification step, in the expected conditions;
- Figures 4 and 5 show the system of Figure 1, during the verification step, in unsafe conditions for the presence of a human beyond a barrier, and
- Figure 6 shows the system of Figure 1, in a delivery step of the load to the robot.

### DETAILED DESCRIPTION

An object of the invention is a system for feeding loads to a robot, indicated overall with the number 100. It comprises a robot 110 and various equipment for feeding loads 200 thereto, for controlling the feeding of the loads 200, and for protecting staff from the robot 110.

Robot 110 is intended as machinery with at least one robotic moving part, which can be controlled automatically. The robot 110 is generally configured to perform predetermined operations on one or more predetermined types of loads 200. The robot 110 is electronically controllable to be activated and deactivated. When active, the robot 110 performs the predetermined operations on the loads 200, and thus at least one movable part is in motion. When it is deactivated, the robot 110 stops (regardless of whether it remains powered or is de-energized), and therefore the risk area is also safe.

Preferred examples of loads 200 are pallets on which predetermined product packages are loaded. For example, the robot 110 can unload the products from the pallet, remove the packaging and/or perform other predetermined operations on the products themselves.

The system 100 comprises a barrier 120 spaced apart from the robot 110 in a longitudinal direction X-X. The barrier 120 is arranged transversely to the longitudinal direction X-X, and is configured to keep human operators away from the robot 110. Depending on the position of the robot 110 in a room, the barrier can be part of a fence that surrounds the robot 110 on multiple sides, or it can pass through the room between two walls of the room. The barrier 120 thus delimits an area of risk around the robot 110.

The barrier 120 has a passage opening 121 which can be passed through by a load 200, in order to bring the load 200 towards the robot 110. Preferably, the barrier 120 also has two lateral elements 122 that protrude from the passage opening 121 towards the robot 110.

The system 100 then comprises a conveyor belt 130, arranged at least in part along the longitudinal direction X-X between the opening 121 of the barrier 120 and the robot 110. At least part of the conveyor belt 130 is preferably arranged between the two lateral elements 122 of the barrier 120. The conveyor belt 130 is operable to transport loads 200 from the through opening 121 to the robot 110. The longitudinal direction X-X therefore also represents a direction of advancement of the conveyor belt 130.

Optionally, the conveyor belt 130 also comprises a loading portion that extends outside the risk area, i.e., farther from the robot 110 with respect to the barrier 120. The conveyor belt thus also extends through the opening 121. Therefore, the loads 200 can be positioned on the loading portion outside of the risk area, and carried past the barrier 120 by the conveyor belt 130.

Alternatively, as shown in the figures, the load 200 can be loaded onto the conveyor belt 130 directly through the opening 121, without the conveyor belt 130 protruding from the barrier 120.

The system 100 then comprises a control system for feeding loads 200 to the robot 110. The control system can be marketed independently of potentially pre-existing components of the system 100, such as the robot 110, the barrier 120, and the conveyor belt 130. The control system therefore constitutes an independent object of the invention. The control system also allows carrying out a method for safely feeding loads 200 to a robot 110, also an independent object of the invention. From the following detailed description of the control system, a person skilled in the art will also easily recognize the steps of the method.

The control system comprises a radar system 140, which comprises one or more radar devices 141, independent or interdependent from/with each other. In preferred embodiments, the radar system 140 comprises a single radar device 141. In the figures the radar device 141 is positioned on a support above the conveyor belt 130, in particular a stand support.

The radar system 140 is configured to detect moving targets in three distinct detection regions 142a, 142b, 142c, i.e., a first region 142a, a second region 142b, and a third region 142c. In the figures, such regions have been shown with a semitransparent colour, and with dashed lines to indicate the upper limits thereof.

In the preferred embodiment, the radar system 140 comprises one or more controllers (not illustrated) in signal communication with respective radar devices 141. For example, a controller can be provided for each radar device 141 or a single controller can be provided for all radar devices 141. The controller is generally configured to process the signal from each connected radar device 141, and/or to control each connected radar device 141, and/or to send signals to external devices based on the radar signals received from each connected radar device 141.

For example, the controller can be configured to analyse the radar signal and determine whether moving targets are present or absent in the three regions 142a, 142b, 142c. In other embodiments, these processes can be carried out directly by the radar device 141 without the need for external controllers.

Preferably, in manners known per se, the radar system 140 is configured to detect moving targets in the three regions 142a, 142b, 142c, and to not detect stationary targets therein. Alternatively, the radar system 140 can detect both moving and stationary targets, but must at least distinguish between them, so as to signal these targets differently, or to signal one type and ignore the other.

The radar system 140 is further configured to generate a status signal indicating the presence and absence of moving targets detected in each of the first, second, and third regions 142a, 142b, 142c, The status signal is preferably a set of three Boolean logic outputs (generally independent of each other), each of which indicates the presence or absence of moving targets in a respective region 142a, 142b, 142c. The status signal is instead insensitive to the presence or absence of fixed targets in the three regions 142a, 142b, 142c.

Preferably, the status signal is generated by the controller, but embodiments in which it is generated directly by a radar device 141 are not excluded.

In the preferred embodiment, each radar device 141 is a volumetric radar device, configured to detect the target position in a system of three spatial coordinates, for example distance, azimuth angle (substantially horizontal) and elevation angle (substantially vertical).

Still in the preferred embodiment, each radar device 141 is configured to monitor detection regions 142a, 142b, 142c in the form of cuboids, i.e., parallelepipeds. Preferably, the radar device 141 can be set to adjust sizes of the detection regions 142a, 142b, 142c in cuboid shape. Preferably, the radar device 141 can be set to monitor a first and a second type of detection area 142a, 142b, 142c, where the first type (or barrier type) are detection areas 142a, 142c with a predetermined minimum thickness in one of three Cartesian coordinates, and the second type are detection areas 142b with adjustable dimensions in the three Cartesian coordinates, all three greater than the predetermined minimum thickness.

Advantageously, as illustrated in the figures, a single radar device 141 can be configured to simultaneously monitor the first, second, and third regions 142a, 142b, 142c, which can all be parallelepiped-shaped regions. In particular, the first and third regions 142a, 142c are illustrated of the first type, i.e., with a minimum thickness (in particular in the longitudinal direction X-X), while the second region 142b is illustrated of the second type.

In other embodiments, not illustrated, each region 142a, 142b, 142c can be monitored by a separate radar device 141. Alternatively, one of the radar devices 141 can simultaneously monitor more than one region 142a, 142b, 142c, while at least one other region 142a, 142b, 142c can be monitored by a separate radar device 141. Still alternatively, one or more of the regions 142a, 142b, 142c can be subdivided into subregions, monitored by distinct radar devices 141, it being understood that the control logic is based on the overall target detection in the entire region 142a, 142b, 142c in question.

In more detail, the first, second and third regions 142a, 142b, 142c are arranged above the conveyor belt 130, without penetrating the conveyor belt 130, and are aligned with each other and contiguous along the longitudinal direction X-X. Thus, the second region 142b is arranged in the longitudinal direction X-X between the first and third regions 142a, 142c, and is contiguous to both. In particular, there are no gaps between the second region 142b and the other two regions 142a, 142c. The second region 142b can partially interpenetrate the other two 142a, 142c, or can have a common surface with each of them, while in general there are no gaps (i.e., unmonitored) between the second region 142b and each of the other two regions 142a, 142c. It should be noted that the first and third regions 142a, 142c, even if they were to interpenetrate the second region 142b, are generally separated from each other.

Preferably, the first, second, and third regions 142a, 142b, 142c are located between the lateral elements 122 of the barrier 120. Still preferably, the first, second and third regions 142a, 142b, 142c occupy substantially all of a space between the lateral elements 122 in a width direction, transverse to the longitudinal direction X-X.

The first region 142a is sized to occupy the passage opening 121 of the barrier 120, above the conveyor belt 130. Thus, it is assumed that a target which overcomes the barrier 120 to approach the robot 110, be it an operator or a load 200, is at least temporarily detected as a moving target in the first region 142a. Therefore, one of the logical outputs of the status signal, relative to the first region 142a, is brought to a level indicative of the presence of moving targets.

The third region 142c is sized to be located above the conveyor belt 130, near the robot 110, i.e., closer to the robot with respect to the first and second regions 142a, 142b. Preferably, the third region 142c is arranged between the lateral elements 122, in particular at end portions of the lateral elements 122. Optionally, the third region 142c can be above one end of the conveyor belt 130, but in the illustrated embodiments one end of the conveyor belt 130 is closer to the robot 110 with respect to the third region 142c.

Therefore, it is assumed that a target coming from the conveyor belt 130 which reaches the robot 110, be it an operator or a load 200, is at least temporarily detected as a moving target in the third region 142c. Therefore, one of the logical outputs of the status signal, relative to the third region 142c, is brought to a level indicative of the presence of moving targets.

The second region 142b, as already discussed, is sized to be located between the first and third regions 142a, 142c, above the conveyor belt 130. In more detail, the dimensions of the second region 142b in the longitudinal direction X-X are sufficient to entirely contain a predetermined load 200, without the predetermined load 200 occupying at the same time neither the first nor the third region 142a, 142c.

Therefore, it is assumed that a target, coming from the first region 142a and directed along the conveyor belt 130 towards the third region 142c that reaches the robot 110, be it an operator or a load 200, is at least temporarily detected as a moving target in the third region 142c. If this is a load 200, it will at least temporarily be detected in the second region 142b without being detected in the first and third regions 142a, 142c. Therefore, one of the logical outputs of the status signal, relative to the second region 142b, is brought to a level indicative of the presence of moving targets.

Note that the lateral elements 122 prevent loads 200 and operators from exiting the conveyor belt 130 laterally, and then approaching the robot 110 by bypassing one or more of the first, second, and third regions 142a, 142b, 142c.

The control system comprises a processing system (not illustrated), in signal communication with the robot 110, the conveyor belt 130 and the radar system 140 (in particular with one or more controllers of the radar system 140), to control the robot 110 and the conveyor belt 130 as a function of the status signal received from the radar system 140.

In more detail, the processing system comprises a first communication channel for receiving the status signal from the radar system 140, a second communication channel for controlling a conveyor belt 130, and a third communication channel for controlling a robot 110. Note that the conveyor belt 130 and the robot 110 can also be controlled by other logical units separate from the processing system, but the processing system must be able to send them at least the control signals described below relating to safety.

The processing system is configured to run software that determines the generation of different control commands of the conveyor belt 130 and the robot 110 as a function of the status signal. In particular, it is envisaged that in conditions of normal safe operation, with the load 200 being brought to the robot 110 without a human entering the detection regions 142a, 142b, 142c, the status signal assumes different values with a certain sequence. The control commands may therefore be different in general both as a function of the current state of the status signal and the step of the sequence that has been reached.

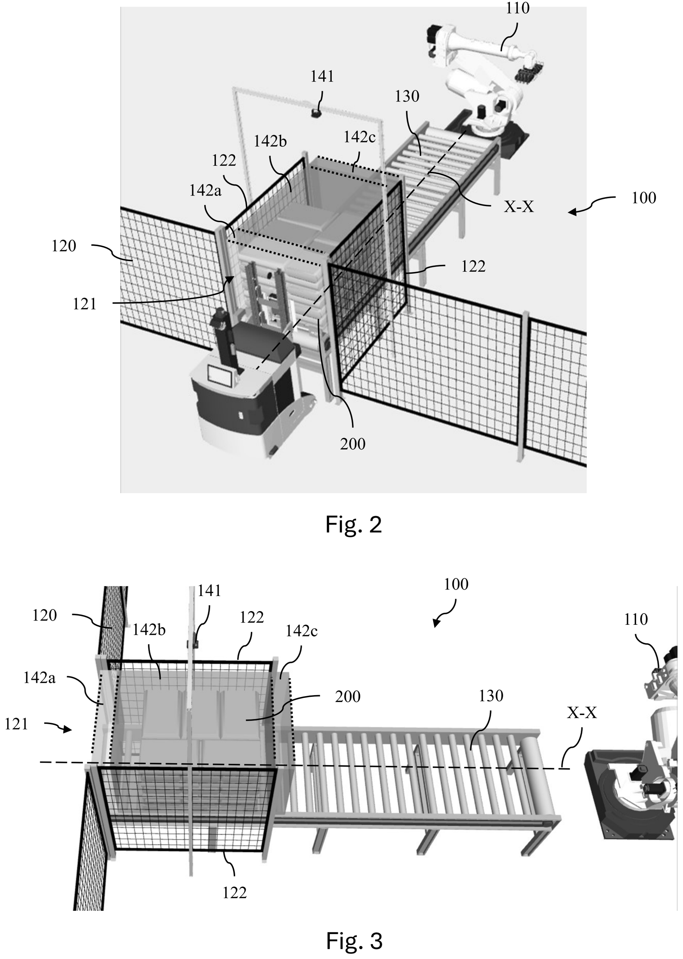

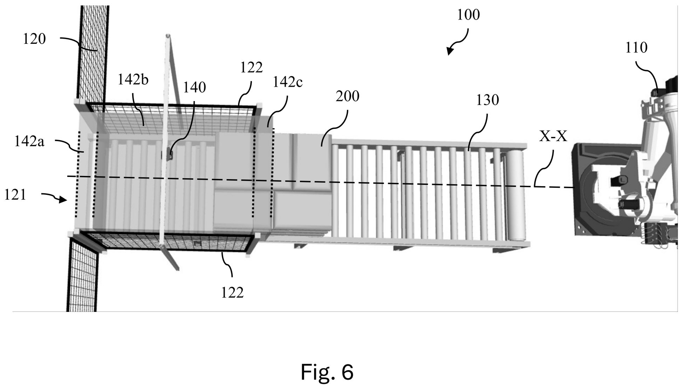

The normal operating sequence is divided into three parts, i.e., in order, a sequence of entry steps (Figure 2), a verification step (Figures 3-5), and a delivery step (Figure 6).

During the sequence of entry steps and the verification step, as a safety measure it is envisaged that the detection of a moving target in the third region 142c determines the deactivation of the robot 110. In other words, in these steps, the processing system is configured to control the deactivation of the robot 110 when the status signal contains an indication that a moving target is detected in the third region 142c.

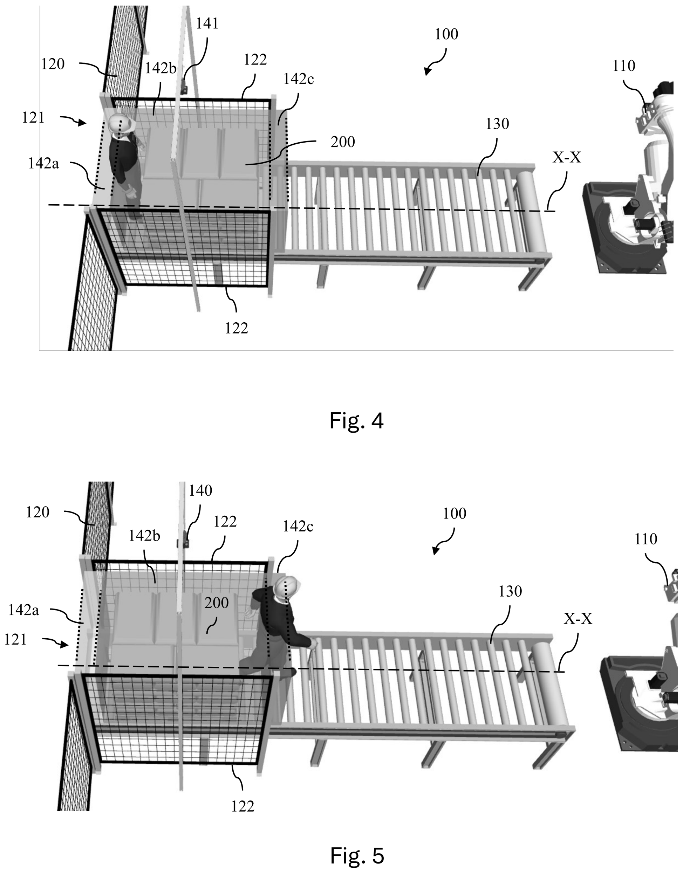

The entry and verification steps are in fact steps in which the load 200 is not expected to reach the third detection region 142c, and therefore the presence of a moving target in such a region 142c is potentially an unsafe condition in which an operator has approached the robot 110 passing through the opening 121 and along the conveyor belt 130 (as in Figure 5).

Preferably, once the robot 110 is deactivated, the processing system cannot automatically reactivate it without the confirmation, by an operator, that predetermined safety conditions have been restored.

Since in any case also in normal safe operation the load 200 will have to reach the robot 110, and then pass through the third region 142c, a moment must be envisaged in which the detection of targets in the third region 142c does not determine the deactivation of the robot 110. This moment is the delivery step.

Therefore, during the delivery step, a different safety measure must be envisaged, which is not based on the third region 142c. In particular, in the verification step and in the delivery step, the detection of moving targets in the first region 142a determines the deactivation of the robot 110. In other words, in these steps, the processing system is configured to control the deactivation of the robot 110 when the status signal contains an indication that a moving target is detected in the first region 142a.

In fact, these are steps in which it is envisaged that the load 200 has already totally passed the first detection region 142a, and therefore the presence of a moving target in said region 142a is potentially an unsafe condition in which an operator has followed the load 200 and passed through the opening 121. From that moment, the processing system is no longer able to distinguish whether the operator approaches the robot 110 further, considering that in these steps the load 200 can be detected in the third region 142c without deactivating the robot 110. The preventive disabling of the robot 110 is therefore justified, even if the first region 142a is not the closest to the robot 110.

Again, once the robot 110 is deactivated, the processing system cannot automatically reactivate it without confirmation from an operator.

The central verification step is designed to verify having reached a predetermined safety condition, which justifies the passage to the delivery step, and therefore allows the targets to pass through the third region 142c without disabling the robot 110. In summary, as already mentioned during the verification step, the robot 110 is disabled if moving targets are detected in the first and/or third regions 142a, 142c. In addition, it should be excluded that a human is present in the second region 142b, which could have reached the second region 142b next to a load 200, or in place of a load 200.

The safety condition must therefore be a status signal condition indicative of the absence of humans between the robot 110 and the barrier 120.

During the sequence of entry steps, the load 200 is detected as moving target in the first and second regions 142a, 142b (not necessarily at the same time). In these steps, the processing system is configured to monitor the status signal in reference to the presence of moving targets in the first and second regions 142a, 142b.

In the preferred embodiment, during the sequence of entry steps, the processing system commands the conveyor belt 130 to advance in such a way as to transport the load 200 towards the robot 110. In other embodiments, the conveyor belt 130 can remain still in the sequence of entry steps, thereby allowing an operator or other handling device to position the load 200 appropriately for the subsequent steps.

The sequence of entry steps ends when the monitoring of the status signal results in the confirmation that a predetermined intermediate condition has been reached. According to the invention, the intermediate condition is a condition in which the presence of at least one moving target is detected in the second region 142b, and in which the absence of moving targets is detected in the first and third regions 142a, 142c.

Generally, the sequence of entry steps comprises, in order, a first entry step in which a moving target is detected only in the first region 142a, and a second entry step in which moving targets are detected in both the first and second regions 142a, 142b (which may be different parts of the same load 200). The intermediate condition then follows the second entry step. The conveyor belt 130 could also advance in only one of the entry steps.

It should be noted that in the sequence of entry steps the control system generally does not command the disabling of the robot 110 despite moving targets being detected in the first and/or second regions 142a, 142b.

Once the intermediate condition is reached, the load 200 has passed the first region 142a, and therefore it is possible to pass to the verification step. In fact, from this moment it is justified to command the disabling of the robot 110 in the event of moving targets detected in the first region 142a.

In the verification step, starting from the intermediate condition, the processing system commands the conveyor belt 130 to stop, if it was moving, and in any case to remain still, until the predetermined safety condition is reached. Thanks to the fact that the conveyor belt 130 remains still, the load 200, in the second region 142b, passes from being a moving target to being a fixed target, which is not detected by the radar system 140, or is detected but ignored by it. In both cases, if the target detected so far was actually a load 200, without humans, the status signal passes from a level indicating the presence of moving targets in the second region 142b to a level indicating the absence of moving targets in the second region 142b.

According to the invention, the safety condition is a condition in which the absence of moving targets is detected in the first, second, and third regions 142a, 142b, 142c. If, on the other hand, following the stop of the conveyor belt 130, the status signal remains for a first predetermined time in a condition in which it indicates the presence of moving targets in the second region 142b, the processing system commands the disabling of the robot 110. Indeed, a human could be present in the second region 142b, as in Figure 4. Again, once the robot 110 is deactivated, the processing system cannot automatically reactivate it without confirmation from an operator.

It should be noted that instead the control system generally does not command the deactivation of the robot 110 for the detection of moving targets in the second region 142b before the conveyor belt 130 has stopped, and optionally until the first predetermined time is reached.

The achievement of the safety condition in itself indicates that, despite the presumed presence of a load 200, nothing moves in the three regions 142a, 142b, 142c, and therefore it is safe, as it is considered unlikely that a human can remain sufficiently still not to be detected as a moving target, and precisely at the moment of the verification. However, for even greater safety, in an embodiment it can be envisaged that the safety condition is considered satisfied only in the event that the absence of a target is verified at least for a second predetermined time.

The safety condition is then identified by a condition of the status signal indicative of the absence of humans between the robot 110 and the barrier 120. From this moment, considering that the entry of new moving targets in the first region 142a leads to disabling the robot 110, it is justified to allow the start of the delivery step and the load 200 to pass through the third region 142c.

In the delivery step, starting from the safety condition, the processing system again commands the conveyor belt 130 to advance and transport the load 200 towards the robot 110. As anticipated, in the delivery step the processing system is configured to not command the deactivation of the robot 110 for the detection of moving targets only in the third region 142c (as well as in the second region 142b), while it is configured to command the deactivation of the robot 110 for the detection of moving targets in the first region 142a.

It is clear that a person skilled in the art will be able to make numerous equivalent modifications to the variants set forth above, without thereby departing from the scope of protection as defined by the appended claims.

## Claims

1. A method for safely feeding loads (200) to a robot (110), comprising:
- providing a robot (110);
- providing a barrier (120) spaced from the robot (110), having a passage opening (121),
- providing a conveyor belt (130) operable to transport loads (200) from the passage opening (121) to the robot (110),
- providing a radar system (140) configured to detect moving targets in three distinct detection regions (142a, 142b, 142c) above the conveyor belt (130), including a first region (142a) which occupies the passage opening (121), a third region (142c) proximal to the robot (110), and a second region (142b) between the first and third regions (142b, 142c),
- controlling the operation of the conveyor belt (130) and the robot (110) as a function of the detection of targets by the radar system (140) in the first, second, and third regions (142c), such that:
- in a sequence of entry steps and in a verification step, following the sequence of entry steps, the detection of a moving target in the third region (142c) determines the deactivation of the robot (110),
- in the sequence of entry steps, a load (200) is detected as a moving target in the first and second regions (142a, 142b), until a predetermined intermediate condition is reached, identified by such a combination of target detections in the first, second and third regions (142a, 142b, 142c) as to determine the start of the verification step, wherein the intermediate condition is a condition in which the presence of at least one moving target is detected in the second region (142b), and in which the absence of moving targets is detected in the first and third regions (142a, 142c),
- in the verification step, starting from the intermediate condition, the conveyor belt (130) is controlled to remain still, and while the conveyor belt (130) is still it is verified whether a predetermined safety condition is fulfilled, identified by a combination of target detections in the first, second and third regions (142a, 142b, 142c) indicative of the absence of humans between the robot (110) and the barrier (120), wherein the safety condition is a condition in which the absence of moving targets is detected in the first, second, and third regions (142a, 142b, 142c),
- in a delivery step, following the verification step, starting from the safety condition, the conveyor belt (130) is controlled to advance and transport the load (200) towards the robot (110), and the detection of moving targets in the third region (142c) does not determine the deactivation of the robot (110).

2. Method according to claim 1, wherein the radar system (140) is configured to detect moving targets in the first, second, and third regions (142a, 142b, 142c), and to not detect stationary targets.

3. Method according to any one of claims 1 to 2, wherein, in the verification step and in the delivery step, the detection of moving targets in the first region (142a) determines the deactivation of the robot (110).

4. Method according to any one of claims 1 to 3, wherein:
- in the sequence of entry steps, the conveyor belt (130) is controlled to advance and transport the load (200) towards the robot (110), and
- in the verification step, the conveyor belt (130) is controlled to stop before verifying whether the safety condition is fulfilled.

5. Method according to any one of claims 1 to 4, wherein the first and third regions (142a, 142b, 142c) are barrier-shaped regions (120), and the second region (142b) is a region with greater dimensions than the first and third regions (142a, 142c) in an advancement direction (X-X) of the conveyor belt (130), wherein the dimensions of the second region (142b) in the advancement direction are sufficient to entirely contain a predetermined load (200), which preferably comprises a pallet.

6. Method according to any one of claims 1 to 5, wherein the sequence of entry steps comprises a first step in which a moving target is detected only in the first region (142a), and a second step in which moving targets are detected in both the first and second regions (142a, 142b), the intermediate condition following the second step.

7. The method according to any one of claims 1 to 6, wherein the radar system (140) is identified by a single radar device (141) configured to simultaneously monitor the first, second, and third regions (142a, 142b, 142c), preferably wherein the first, second, and third regions (142c) are parallelepiped-shaped regions, and the radar device (141) is a volumetric radar device configured to detect the target position in a three spatial coordinate system.

8. Control system for feeding loads (200) to a robot (110), comprising:
- a radar system (140), configured to detect moving targets in three distinct detection regions (142a, 142b, 142c) above a conveyor belt (130), including a first region (142a) sized to occupy a passage opening (121) of a barrier (120), a third region (142c) sized to be located proximal to a robot (110), and a second region (142b) between the first and third regions (142c),
wherein the radar system (140) is further configured to generate a status signal indicating the presence and absence of moving targets detected in each of the first, second, and third regions (142a, 142b, 142c),
- a processing system (150), having a first communication channel for receiving the status signal from the radar system (140), a second communication channel for controlling a conveyor belt (130), and a third communication channel for controlling a robot (110),
wherein the processing system is configured to control the operation of the conveyor belt (130) and the robot (110) as a function of the status signal, such that:
- in a sequence of entry steps and in a verification step, following the sequence of entry steps, the detection of a moving target in the third region (142c) determines the deactivation of the robot (110),
- in the sequence of entry steps, the status signal is monitored with reference to the presence of moving targets in the first and second regions (142a, 142b), until a predetermined intermediate condition is reached, identified by such a condition of the status signal as to determine the start of the verification step,
- in the verification step, starting from the intermediate condition, the conveyor belt (130) is controlled to stop and remain still, until a predetermined safety condition is reached, identified by a condition of the status signal indicative of the absence of humans between the robot (110) and the barrier (120),
- in a delivery step, following the verification step, starting from the safety condition, the conveyor belt (130) is controlled to advance and transport the load (200) towards the robot (110), and the detection of moving targets in the third region (142c) does not determine the deactivation of the robot (110).

9. System (100) for feeding loads (200) to a robot (110), comprising:
- a robot (110),
- a barrier (120) spaced from the robot (110), having a passage opening (121),
- a conveyor belt (130) operable to transport loads (200) from the passage opening (121) to the robot (110), and
- the control system of claim 8.
